(19) Europäisches Patentamt
European Patent Office
Office européen des brevets

(11) EP 1 253 585 A1

(12) **EUROPEAN PATENT APPLICATION**

(43) Date of publication:
**30.10.2002 Bulletin 2002/44**

(51) Int Cl.[7]: **G11B 5/712**, C09C 3/12, H01F 1/06, H01F 1/26

(21) Application number: **02252911.9**

(22) Date of filing: **25.04.2002**

(84) Designated Contracting States:
**AT BE CH CY DE DK ES FI FR GB GR IE IT LI LU MC NL PT SE TR**
Designated Extension States:
**AL LT LV MK RO SI**

(30) Priority: **27.04.2001 JP 2001133692**

(71) Applicant: **Toda Kogyo Corporation**
**Hiroshima-shi, Hiroshima-ken (JP)**

(72) Inventors:
- **Kamigaki, Mamoru**
**Hatsukaichi-shi, Hiroshima-ken (JP)**
- **Morii, Hiroko**
**Hiroshima-shi, Hiroshima-ken (JP)**
- **Hayashi, Kazuyuki**
**Hiroshima-shi, Hiroshima-ken (JP)**

(74) Representative: **Woods, Geoffrey Corlett**
**J.A. KEMP & CO.**
**Gray's Inn**
**14 South Square**
**London WC1R 5JJ (GB)**

(54) **Composite magnetic particles containing iron, process for producing the same and magnetic recording medium**

(57) Composite magnetic metal particles containing iron as a main component, suitable for use in a magnetic recording medium, comprise:

(a) magnetic metal particles containing iron as a main component; and
(b) a polyether-modified polysiloxane coat provided on the surface of the magnetic metal particles in an amount of from 0.02 to 10% by weight, calculated as Si, based on the weight of the composite magnetic metal particles. The composite magnetic metal particles have an average major axis diameter of 0.02 to 0.30 µm and a soluble sodium salt content of not more than 10 ppm.



Printed by Jouve, 75001 PARIS (FR)

## Description

The present invention relates to composite magnetic metal particles containing iron as a main component, a process for producing the composite magnetic metal particles containing iron as a main component and a magnetic recording medium, and more particularly, to composite magnetic metal particles containing iron as a main component which are capable of exhibiting excellent dispersibility and oxidation stability while maintaining good magnetic properties, a process for producing the composite magnetic metal particles containing iron as a main component and a magnetic recording medium using the composite magnetic metal particles containing iron as a main component.

In recent years, miniaturization, lightening, recording-time prolongation, high-density recording and increased memory capacity of magnetic recording and reproducing apparatuses for audio, video or computer have proceeded more rapidly. For this reason, various magnetic recording media used in these apparatuses, such as magnetic tapes and magnetic disks have also been required to have a high performance and a high-density recording property.

More specifically, the magnetic recording media have been required to have a high image definition, high image characteristics and high output characteristics, especially excellent frequency characteristics as well as improved storage stability and durability.

These properties of the magnetic recording media have a close relation to magnetic particles used therein. In recent years, magnetic metal particles containing iron as a main component, which show a higher coercive force and a larger saturation magnetization as compared to those of conventional magnetic iron oxide particles, have been noticed. These magnetic metal particles containing iron as a main component have been already used as magnetic particles for magnetic recording media such as digital audio tapes (DAT), 8-mm video tapes, Hi-8 tapes, W-VHS tapes for Hi-vision and DVC tapes for digital recording systems as well as removable disks such as Zip disks and Super disks or Hi-FD for computers.

However, the magnetic metal particles containing iron as a main component used in the magnetic recording media are extremely fine particles having a particle size as small as usually not more than 1 μm, especially about 0.02 to about 0.20 μm, and, therefore, are readily susceptible to oxidation, thereby causing deterioration in magnetic properties, in particular, deterioration in coercive force and saturation magnetization.

As to this fact, Japanese Patent Application Laid-Open (KOKAI) No. 5-81648(1993) describes that " ····· the fine ferromagnetic metal particles tend to be readily oxidized in atmospheric air because of its high surface activity, resulting in firing in worse cases. This tendency becomes more remarkable when finer magnetic particles are used for reducing noise of magnetic recording media. For this reason, when the above fine ferromagnetic metal particles are used as magnetic particles for magnetic recording media, the particles tend to suffer from accelerated oxidation by adverse influence of mainly oxygen as well as certain kinds of gases, water or the like during storage of such particles, during preparation of a coating material by using such particles in combination with resins, organic solvents, etc., or during storage of a sheet material produced by applying the coating material onto a base film such as polyester film in a specific atmosphere or under specific temperature and humidity conditions. This causes deterioration in magnetic properties of the obtained magnetic recording media, such as saturation magnetization with the passage of time, resulting in poor storage stability".

Therefore, in order to keep properties of the magnetic recording media using the magnetic metal particles containing iron as a main component as magnetic particles for a long period of time, the magnetic metal particles containing iron as a main component have been strongly required to have an excellent oxidation stability.

Further, it has been conventionally pointed out that one factor of causing deterioration in magnetic properties and storage stability of magnetic recording media as well as in dispersion stability of a coating material used therefor is a large content of soluble alkali metal contained therein, in particular, large soluble sodium salt content.

This face is described in detail below.

Namely, the magnetic metal particles containing iron as a main component are usually produced by using as starting particles, (i) goethite particles obtained by passing an oxygen-containing gas such as air through a suspension containing an iron-containing precipitate obtained by reacting an aqueous ferrous salt solution with an aqueous alkali solution such as an aqueous solution of sodium hydroxide, potassium hydroxide or sodium carbonate for conducting an oxidation reaction thereof, (ii) hematite particles obtained by heat-dehydrating the goethite particles, or (iii) particles obtained by incorporating different elements other than iron into these particles; and heat-reducing the starting particles under a reducing gas atmosphere.

Owing to the above production process, the magnetic metal particles containing iron as a main component contain sodium as well as calcium inevitably introduced during the production process. When such magnetic metal particles containing iron as a main component, which further contain the soluble sodium salt and/or the soluble calcium salt, are used as magnetic particles for producing magnetic recording media, there arises such a problem that compounds derived from the soluble salts such as soluble sodium salt and soluble calcium salt are precipitated on a magnetic coating film or a magnetic head. As to this fact, Japanese Patent Application Laid-Open (KOKAI) No. 9-305958 (1997) describes that "When the total amount of water-soluble ions contained in magnetic materials, non-magnetic

materials, carbon black and fillers used in the respective layers exceeded a certain level, it was recognized that the obtained magnetic tape suffered from increased friction coefficient upon running the tape after stored under high-temperature and high-humidity conditions, and in extreme cases, the magnetic tape caused a "stuck" phenomenon and stopped. In still worse cases, solids precipitated on the magnetic tape cause a spacing loss, thereby deteriorating reproduction output of the magnetic tape. Further, the magnetic metal head is severely corroded, resulting in deteriorated recording and reproducing characteristics".

In order to reduce amounts of the soluble salts contained in the magnetic metal particles containing iron as a main component, there may be used either (1) a method of producing the starting particles without using any aqueous alkali solution such as an aqueous solution of sodium hydroxide, or (2) a method of reducing contents of the soluble salts by water-washing. The present invention is directed to the latter method (2).

As the method of reducing contents of the soluble salts by water-washing, there may be exemplified a method of water-washing the respective goethite particles and hematite particles in each stage of the production process of the magnetic metal particles containing iron as a main component, or a method of water-washing the finally obtained magnetic metal particles containing iron as a main component. However, in the former method, there may arise such a problem that when water-washing goethite particles and hematite particles in each stage, only water-soluble salts are removed therefrom. Therefore, when heat-reducing the thus water-washed goethite particles and hematite particles, the insoluble impurities present in the particle migrate onto the surface of the particles and are precipitated thereon in the form of soluble salts. As to this fact, Japanese Patent Application Laid-Open (KOKAI) No. 7-22224(1995) describes that "····· in order to reduce the contents of elements of Group 1a of the Periodic Table to 0.05% by weight or less, the treatment for removing these impurity elements must be conducted if they are inevitably introduced during the production process. ····· In particular, the precipitation of these elements on the surface of the particles become more remarkable as the process proceeds from the production of iron oxide hydroxide to that of iron oxide, and further to the production of magnetic metal particles".

Also, in the later method, when the magnetic metal particles containing iron as a main component are washed with water, since the magnetic properties thereof such as coercive force value tend to be deteriorated, it may be difficult to maintain the magnetic properties of the magnetic metal particles at a high level. Further, the water-washed magnetic metal particles containing iron as a main component tend to form hard agglomerated particles because of a high surface tension of water, resulting in poor dispersibility upon production of a magnetic coating material. In addition, a coating film produced from such a coating material fails to exhibit high magnetic properties inherent to the magnetic metal particles containing iron as a main component.

Techniques for reducing the contents of impurities such as soluble sodium are described in Japanese Patent Application Laid-Open (KOKAI) Nos. 56-51029(1981), 7-22224(1995), 8-172005(1996), 9-231546(1997), 9-305958 (1997) and 10-69629(1998) or the like. Further, techniques for improving oxidation stability and dispersibility of the magnetic metal particles containing iron as a main component by treating the surface thereof with polysiloxanes are described in Japanese Patent Application Laid-Open (KOKAI) Nos. 52-155398(1977), 59-23801(1984) and 63-52327 (1988) or the like.

At present, it has been strongly required to produce magnetic metal particles containing iron as a main component, which are excellent in not only dispersibility but also oxidation stability while maintaining good magnetic properties. However, such magnetic metal particles containing iron as a main component, which can fulfill these properties, have not been obtained conventionally.

That is, in Japanese Patent Application Laid-Open (KOKAI) No. 56-51029(1981), it is described that the ferromagnetic metal particles are washed with an aqueous solvent (water or a mixed solution of water and organic solvent (water content: not less than 50% by weight)). However, when washed with water, the ferromagnetic metal particles tend to form hard agglomerated particles. When washed with the mixed solution of water and organic solvent, the content of the soluble sodium salt is not sufficiently reduced since soluble metal salts are not dissolved in the organic solvent. Also, in this KOKAI No. 56-51029, it is described that the surface of the particles after the water washing is treated with a surfactant. However, the aim of the surface-treatment is to improve not an oxidation stability thereof but a wettability of the particles with binder. Further, the obtained magnetic particles fail to exhibit an excellent oxidation stability.

In addition, in Japanese Patent Application Laid-Open (KOKAI) Nos. 7-22224(1995), 8-172005(1996), 9-231546(1997), 9-305958(1997) and 10-69629(1998), it is described that the magnetic metal particles containing iron as a main component are washed with water. However, the obtained magnetic metal particles containing iron as a main component tend to form hard agglomerated particles, so that the dispersibility thereof tends to be deteriorated upon production of a coating material, and a coating film produced from such a coating material fails to exhibit high magnetic properties inherent to the magnetic metal particles containing iron as a main component.

Furthermore, in Japanese Patent Application Laid-Open (KOKAI) Nos. 52-155398(1977), 59-23801(1984) and 63-52327(1988), it is described that the surface of magnetic particle is coated with a silicone compound. However, the obtained particles fail to show a sufficient oxidation stability since these particles are not washed with water to fully

remove soluble sodium salts therefrom.

As a result of the present inventors' earnest studies, it has been found that by dispersing magnetic metal particles containing iron as a main component in an aqueous solution to water-wash the particles in the form of a water suspension; adding to the water suspension containing the magnetic metal particles containing iron as a main component, polyether-modified polysiloxanes in an amount of 0.02 to 10 parts by weight (calculated as Si) based on 100 parts by weight of the magnetic metal particles; and after stirring, subjecting the resultant mixture to dehydration and filtration, the obtained composite magnetic metal particles containing iron as a main component can exhibit not only an excellent dispersibility but also an excellent oxidation stability due to a less soluble salt content thereof while maintaining good magnetic properties, and further a magnetic recording medium produced by using the composite magnetic metal particles containing iron as a main component can exhibit a high-density recording property and high output characteristics because of high coercive force and excellent dispersion condition thereof as well as an excellent storage stability. The present invention has been attained on the basis of this finding.

An object of the present invention is to provide composite magnetic metal particles containing iron as a main component, which are capable of exhibiting not only an excellent dispersibility but also an excellent oxidation stability due to a less soluble salt content thereof, while maintaining good magnetic properties.

Another object of the present invention is to provide a magnetic recording medium capable of exhibiting a high coercive force and an excellent dispersion condition as well as an excellent storage stability.

To accomplish the aims, in a first aspect of the present invention, there are provided composite magnetic metal particles containing iron as a main component, comprising:

magnetic metal particles containing iron as a main component, and
a polyether-modified polysiloxane coat formed on surface of the magnetic metal particles in an amount of 0.02 to 10% by weight, calculated as Si, based on the weight of the composite magnetic metal particles containing iron as a main component; and
having an average major axis diameter of 0.02 to 0.30 μm and a soluble sodium salt content of not more than 10 ppm.

In a second aspect of the present invention, there is provided a process for producing composite magnetic metal particles containing iron as a main component, comprising:

dispersing magnetic metal particles containing iron as a main component, in an aqueous solution for water-washing the magnetic metal particles in the form of a water suspension; and
adding to the water suspension, polyether-modified polysiloxanes in an amount of 0.02 to 10 parts by weight, calculated as Si, based on 100 parts by weight of the magnetic metal particles contained in the water suspension, and then stirring and subjecting to dehydration.

In a third aspect of the present invention, there is provided a magnetic recording medium, comprising:

a non-magnetic base film; and
a magnetic recording layer formed on the non-magnetic base film, comprising the composite magnetic metal particles containing iron as a main component as defined in the first aspect, and a binder resin.

In a fourth aspect of the present invention, there is provided a magnetic recording medium, comprising:

a non-magnetic base film;
a non-magnetic undercoat layer formed on the non-magnetic base film, comprising non-magnetic particles and a binder resin; and
a magnetic recording layer formed on the non-magnetic undercoat layer, comprising the composite magnetic metal particles containing iron as a main component as defined in the first aspect, and a binder resin.

In a fifth aspect of the present invention, there are provided composite magnetic metal particles containing iron as a main component, comprising:

magnetic metal particles containing iron as a main component, and
a polyether-modified polysiloxane coat formed on surface of the magnetic metal particles in an amount of 0.02 to 10% by weight, calculated as Si, based on the weight of the composite magnetic metal particles containing iron as a main component; and
having an average major axis diameter of 0.02 to 0.30 μm, an average minor axis diameter of 0.001 to 0.15 μm,

an aspect ratio of 2:1 to 20:1, a geometrical standard deviation value of a major axis diameter of not more than 2.5 and a soluble sodium salt content of not more than 10 ppm.

In a sixth aspect of the present invention, there is provided a magnetic recording medium, comprising:

a non-magnetic base film; and
a magnetic recording layer formed on the non-magnetic base film, comprising a binder resin and the composite magnetic metal particles containing iron as a main component, comprising:

magnetic metal particles containing iron as a main component, and
a polyether-modified polysiloxane coat formed on surface of the magnetic metal particles in an amount of 0.02 to 10% by weight, calculated as Si, based on the weight of the composite magnetic metal particles containing iron as a main component; and
having an average major axis diameter of 0.02 to 0.30 μm, an average minor axis diameter of 0.001 to 0.15 μm, an aspect ratio of 2:1 to 20:1, a geometrical standard deviation value of a major axis diameter of not more than 2.5 and a soluble sodium salt content of not more than 10 ppm.

In a seventh aspect of the present invention, there is provided a magnetic recording medium, comprising:

a non-magnetic base film;
a non-magnetic undercoat layer formed on the non-magnetic base film, comprising non-magnetic particles and a binder resin; and
a magnetic recording layer formed on the non-magnetic undercoat layer, comprising a binder resin and the composite magnetic metal particles containing iron as a main component, comprising:

magnetic metal particles containing iron as a main component, and
a polyether-modified polysiloxane coat formed on surface of the magnetic metal particles in an amount of 0.02 to 10% by weight, calculated as Si, based on the weight of the composite magnetic metal particles containing iron as a main component; and
having an average major axis diameter of 0.02 to 0.30 μm, an average minor axis diameter of 0.001 to 0.15 μm, an aspect ratio of 2:1 to 20:1, a geometrical standard deviation value of a major axis diameter of not more than 2.5 and a soluble sodium salt content of not more than 10 ppm.

The present invention will be described in detail below.
First, the composite magnetic metal particles containing iron as a main component according to the present invention are described.
The composite magnetic metal particles containing iron as a main component according to the present invention comprise magnetic metal particles containing iron as a main component and having a soluble sodium salt content of not more than 10 ppm, and a polyether-modified polysiloxane coat adhered onto the surface of the magnetic metal particles.
As the magnetic particles used as core particles in the present invention, there may be exemplified magnetic acicular metal particles containing iron as a main component, and magnetic acicular iron alloy particles containing elements other than Fe such as Co, Al, Ni, P, Zn, Si, B and rare earth metals.
Specifically, the magnetic acicular iron-based alloy particles comprising (i) iron and Al; (ii) iron, Co and Al, (iii) iron, Al and at least one rare-earth metal such as Nd, La and Y, or (iv) iron, Co, Al and at least one rare-earth metal such as Nd, La and Y is more preferable from the point of the durability of the magnetic recording medium. The amount of cobalt contained in the magnetic particles is usually 0.5 to 50 atomic % (calculated as Co); the amount of aluminum contained in the magnetic particles is usually 0.5 to 30 atomic % (calculated as Al); the amount of rare earth metals contained in the magnetic particles is usually 0.5 to 30 atomic % (calculated as the rare earth element).
More specifically, the magnetic acicular iron-based alloy particles may be exemplified as follows.

1) Magnetic acicular iron-based alloy particles comprises iron; and cobalt of usually 0.05 to 40 % by weight, preferably 1.0 to 35 % by weight, more preferably 3 to 30 % by weight (calculated as Co) based on the weight of the magnetic acicular iron-based alloy particles.
2) Magnetic acicular iron-based alloy particles comprise iron; and aluminum of usually 0.05 to 10 % by weight, preferably 0.1 to 7 % by weight (calculated as Al) based on the weight of the magnetic acicular iron-based alloy particles.
3) Magnetic acicular iron-based alloy particles comprises iron; cobalt of usually 0.05 to 40 % by weight, preferably

1.0 to 35 % by weight, more preferably 3 to 30 % by weight (calculated as Co) based on the weight of the magnetic acicular iron-based alloy particles; and aluminum of usually 0.05 to 10 % by weight, preferably 0.1 to 7 % by weight (calculated as Al) based on the weight of the magnetic acicular iron-based alloy particles.

4) Magnetic acicular iron-based alloy particles comprises iron; cobalt of usually 0.05 to 40 % by weight, preferably 1.0 to 35 % by weight, more preferably 3 to 30 % by weight (calculated as Co) based on the weight of the magnetic acicular iron-based alloy particles; and at least one selected from the group consisting of Nd, La and Y of usually 0.05 to 10 % by weight, preferably 0.1 to 7 % by weight (calculated as the corresponding element) based on the weight of the magnetic acicular iron-based alloy particles.

5) Magnetic acicular iron-based alloy particles comprises iron; aluminum of usually 0.05 to 10 % by weight, preferably 0.1 to 7 % by weight (calculated as Al) based on the weight of the magnetic acicular iron-based alloy particles; and at least one selected from the group consisting of Nd, La and Y of usually 0.05 to 10 % by weight, preferably 0.1 to 7 % by weight (calculated as the corresponding element) based on the weight of the magnetic acicular iron-based alloy particles.

6) Magnetic acicular iron-based alloy particles comprises iron; cobalt of usually 0.05 to 40 % by weight, preferably 1.0 to 35 % by weight, more preferably 3 to 30 % by weight (calculated as Co) based on the weight of the magnetic acicular iron-based alloy particles; aluminum of usually 0.05 to 10 % by weight, preferably 0.1 to 7 % by weight (calculated as Al) based on the weight of the magnetic acicular iron-based alloy particles; and at least one selected from the group consisting of Nd, La and Y of usually 0.05 to 10 % by weight, preferably 0.1 to 7 % by weight (calculated as the corresponding element) based on the weight of the magnetic acicular iron-based alloy particles.

7) Magnetic acicular iron-based alloy particles comprises iron; cobalt of usually 0.05 to 40 % by weight, preferably 1.0 to 35 % by weight, more preferably 3 to 30 % by weight (calculated as Co) based on the weight of the magnetic acicular iron-based alloy particles; and at least one selected from the group consisting of Ni, P, Si, Zn, Ti, Cu and B of usually 0.05 to 10 % by weight, preferably 0.1 to 7 % by weight (calculated as the corresponding element) based on the weight of the magnetic acicular iron-based alloy particles.

8) Magnetic acicular iron-based alloy particles comprises iron; aluminum of usually 0.05 to 10 % by weight, preferably 0.1 to 7 % by weight (calculated as Al) based on the weight of the magnetic acicular iron-based alloy particles; and at least one selected from the group consisting of Ni, P, Si, Zn, Ti, Cu and B of usually 0.05 to 10 % by weight, preferably 0.1 to 7 % by weight (calculated as the corresponding element) based on the weight of the magnetic acicular iron-based alloy particles.

9) Magnetic acicular iron-based alloy particles comprises iron; cobalt of usually 0.05 to 40 % by weight, preferably 1.0 to 35 % by weight, more preferably 3 to 30 % by weight (calculated as Co) based on the weight of the magnetic acicular iron-based alloy particles; aluminum of usually 0.05 to 10 % by weight, preferably 0.1 to 7 % by weight (calculated as A1) based on the weight of the magnetic acicular iron-based alloy particles; and at least one selected from the group consisting of Ni, P, Si, Zn, Ti, Cu and B of usually 0.05 to 10 % by weight, preferably 0.1 to 7 % by weight (calculated as the corresponding element) based on the weight of the magnetic acicular iron-based alloy particles.

10) Magnetic acicular iron-based alloy particles comprises iron; cobalt of usually 0.05 to 40 % by weight, preferably 1.0 to 35 % by weight, more preferably 3 to 30 % by weight (calculated as Co) based on the weight of the magnetic acicular iron-based alloy particles; at least one selected from the group consisting of Nd, La and Y of usually 0.05 to 10 % by weight, preferably 0.1 to 7 % by weight (calculated as the corresponding element) based on the weight of the magnetic acicular iron-based alloy particles; and at least one selected from the group consisting of Ni, P, Si, Zn, Ti, Cu and B of usually 0.05 to 10 % by weight, preferably 0.1 to 7 % by weight (calculated as the corresponding element) based on the weight of the magnetic acicular iron-based alloy particles.

11) Magnetic acicular iron-based alloy particles comprises iron; aluminum of usually 0.05 to 10 % by weight, preferably 0.1 to 7 % by weight (calculated as A1) based on the weight of the magnetic acicular iron-based alloy particles; at least one selected from the group consisting of Nd, La and Y of ordinarily 0.05 to 10 % by weight, preferably 0.1 to 7 % by weight (calculated as the corresponding element) based on the weight of the magnetic acicular iron-based alloy particles; and at least one selected from the group consisting of Ni, P, Si, Zn, Ti, Cu and B of usually 0.05 to 10 % by weight, preferably 0.1 to 7 % by weight (calculated as the corresponding element) based on the weight of the magnetic acicular iron-based alloy particles.

12) Magnetic acicular iron-based alloy particles comprises iron; cobalt of usually 0.05 to 40 % by weight, preferably 1.0 to 35 % by weight, more preferably 3 to 30 % by weight (calculated as Co) based on the weight of the magnetic acicular iron-based alloy particles; aluminum of usually 0.05 to 10 % by weight, preferably 0.1 to 7 % by weight (calculated as Al) based on the weight of the magnetic acicular iron-based alloy particles; at least one selected from the group consisting of Nd, La and Y of usually 0.05 to 10 % by weight, preferably 0.1 to 7 % by weight (calculated as the corresponding element) based on the weight of the magnetic acicular iron-based alloy particles; and at least one selected from the group consisting of Ni, P, Si, Zn, Ti, Cu and B of usually 0.05 to 10 % by weight, preferably 0.1 to 7 % by weight (calculated as the corresponding element) based on the weight of the magnetic

acicular iron-based alloy particles.

The iron content in the particles is the balance, and is preferably 50 to 99 % by weight, more preferably 60 to 95 % by weight (calculated as Fe) based on the weight of the magnetic acicular metal particles containing iron as a main component or the magnetic acicular iron-based alloy particles.

The magnetic acicular particles as the core particles have an average major axis diameter of usually 0.02 to 0.30 µm, preferably 0.03 to 0.25 µm and an aspect ratio of usually 2:1 to 20:1, preferably 3:1 to 15:1.

The polyether-modified polysiloxanes used in the present invention are at least one compound selected from the group consisting of those represented by the following formula (I):

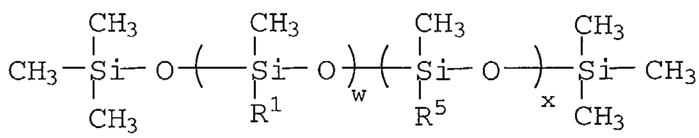

(I)

wherein $R^1$ is

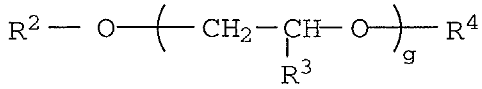

;

$R^2$ is $-(-CH_2-)_1-$; $R^3$ and $R^5$ are $-(-CH_2-)_m-CH_3$ and may be the same or different $R^4$ is -OH, -COOH, $-CH{=}CH_2$, $-CH(CH_3){=}CH_2$ or $-(-CH_2-)_n-CH_3$; 1 and q are an integer of 1 to 15; m and n are an integer of 0 to 15; w is an integer of 1 to 50; and x is an integer of 1 to 300.

The polyether-modified polysiloxanes have a molecular weight of preferably 350 to 500,000, more preferably 1,000 to 100,000, still more preferably 2,000 to 50,000.

In the composite magnetic metal particles containing iron as a main component according to the present invention, the amount of the polyether-modified polysiloxane coat adhered onto the magnetic metal particles containing iron as a main component is usually 0.02 to 10% by weight, preferably 0.04 to 5% by weight (calculated as Si) based on the weight of the composite magnetic metal particles containing iron as a main component. When the amount of the polyether-modified polysiloxane coat is less than 0.02% by weight, it may be difficult to obtain composite magnetic metal particles containing iron as a main component, which can exhibit an excellent oxidation stability. When the amount of the polyether-modified polysiloxane coat is more than 10% by weight, the effect of improving the oxidation stability is already saturated and, therefore, it is unnecessary and meaningless to adhere the polyether-modified polysiloxanes in such a large amount. Further, the use of such a large amount of the polyether-modified polysiloxanes causes the increase in amount of non-magnetic components, resulting in deteriorated magnetic properties of the obtained composite magnetic metal particles containing iron as a main component.

The composite magnetic metal particles containing iron as a main component according to the present invention have an average major axis diameter of usually 0.02 to 0.30 µm, and preferably 0.03 to 0.25 µm in the consideration of good surface smoothness of a coating film produced using the particles as well as good dispersibility in vehicle upon production of a magnetic coating material. When the average major axis diameter is more than 0.30 µm, the obtained composite magnetic metal particles containing iron as a main component become coarse. As a result, when such coarse particles are used to form a magnetic recording layer, the obtained coating film tends to be deteriorated in surface smoothness. When the average major axis diameter is less than 0.02 µm, such particles tend to be agglomerated together because of the increase of the intermolecular force therebetween due to fine particles, resulting in poor dispersibility in vehicle upon production of a magnetic coating material.

The composite magnetic metal particles containing iron as a main component according to the present invention contain a soluble sodium salt in an amount of usually not more than 10 ppm, preferably not more than 8 ppm. When the soluble sodium salt content is more than 10 ppm, the obtained composite magnetic metal particles containing iron as a main component tend to be deteriorated in oxidation stability and dispersibility, and magnetic recording media produced by using such particles tend to be deteriorated in storage stability.

The composite magnetic metal particles containing iron as a main component according to the present invention have an acicular shape. The "acicular" shape used therein is intended to involve a spindle shape, a rice-ball

shape or the like in addition to literally a needle shape.

The composite magnetic metal particles containing iron as a main component according to the present invention have an average minor axis diameter of preferably 0.001 to 0.15 μm, more preferably 0.0015 to 0.125 μm. When the average minor axis diameter is less than 0.001 μm, such particles may tend to be agglomerated together because of the increase of the intermolecular force therebetween due to fine particles, resulting in poor dispersibility in vehicle upon production of a magnetic coating material. Meanwhile, the particles having an average minor axis diameter of more than 0.15 μm may be difficult to produce industrially.

The composite magnetic metal particles containing iron as a main component according to the present invention have an aspect ratio of preferably not less than 2:1, more preferably not less than 3:1. The upper limit of the aspect ratio is preferably 20:1, more preferably 15:1. When the aspect ratio is more than 20:1, such particles may tend to be entangled together, resulting in poor dispersibility in vehicle upon production of a magnetic coating material. When the aspect ratio is less than 2:1, the obtained magnetic recording media may tend to be deteriorated in strength of a coating film formed.

The composite magnetic metal particles containing iron as a main component according to the present invention have a geometrical standard deviation value of the major axis diameter of preferably not more than 2.5, more preferably not more than 2.3. When the geometrical standard deviation value of the major axis diameter is more than 2.5, the obtained particles may be prevented from being uniformly dispersed because of existence of coarse particles, resulting in poor dispersibility in vehicle upon production of a magnetic coating material. The lower limit of the geometrical standard deviation value is usually 1.01. Meanwhile, the particles having a geometrical standard deviation value of less than 1.01 may be difficult to produce industrially.

The composite magnetic metal particles containing iron as a main component according to the present invention have a BET specific surface area value of preferably 35 to 100 $m^2/g$, more preferably 38 to 90 $m^2/g$, still more preferably 40 to 80 $m^2/g$. When the BET specific surface area value is less than 35 $m^2/g$, the obtained composite magnetic metal particles containing iron as a main component may become coarse, or sintering may be caused between the particles, so that the magnetic recording layer produced by using such particles may tend to be deteriorated in surface smoothness. When the BET specific surface area value is more than 100 $m^2/g$, such particles may tend to be agglomerated together by the increase of intermolecular force therebetween due to fine particles, resulting in poor dispersibility in vehicle upon production of a magnetic coating material.

The oxidation stability of the composite magnetic metal particles containing iron as a main component according to the present invention is expressed by the percentage (%) of change in coercive force value thereof or the percentage (%) of change in saturation magnetization value thereof. More specifically, the percentage (%) of change in coercive force value of the particles is preferably not more than 12%, more preferably not more than 10%, and the percentage (%) of change in saturation magnetization value thereof is preferably not more than 12%, more preferably not more than 10%.

The deagglomerating ability (based on crush test) of the composite magnetic metal particles containing iron as a main component according to the present invention is preferably Rank 5 or 4, more preferably Rank 5 as evaluated by the below-mentioned method.

The deagglomerating ability of the composite magnetic metal particles containing iron as a main component on the basis of the particle size distribution thereof is determined by the below-mentioned evaluation method. More specifically, the composite magnetic metal particles containing iron as a main component according to the present invention have such a deagglomerating ability that the average particle diameter based on the particle size distribution as measured by the below-mentioned method is preferably not more than 5.0 μm, more preferably 0.02 to 4.0 μm, still more preferably 0.03 to 3.0 μm; and the amount of particles having a particle diameter of not more than 10 μm based on the particle size distribution is preferably not less than 90.0%, more preferably not less than 92.5%, still more preferably not less than 95.0%.

As to the magnetic properties of the composite magnetic metal particles containing iron as a main component according to the present invention, the coercive force value thereof is preferably 63.7 to 278.5 kA/m (800 to 3,500 Oe), more preferably 71.6 to 278.5 kA/m (900 to 3,500 Oe); and the saturation magnetization value thereof is preferably 90 to 170 $Am^2/kg$ (90 to 170 emu/g), more preferably 100 to 170 $Am^2/kg$ (100 to 170 emu/g).

Next, the process for producing the composite magnetic metal particles containing iron as a main component according to the present invention is described.

The magnetic metal particles containing iron as a main component used in the present invention may be any of magnetic metal particles ordinarily used for the production of magnetic recording media. For example, the magnetic metal particles may be produced by using as starting particles, (i) goethite particles obtained by passing an oxygen-containing gas such as air through a suspension containing an iron-containing precipitate obtained by reacting an aqueous ferrous salt solution with an aqueous alkali solution such as an aqueous solution of sodium hydroxide, potassium hydroxide or sodium carbonate, for conducting an oxidation reaction thereof, (ii) hematite particles obtained by heat-dehydrating the goethite particles, or (iii) particles obtained by incorporating different elements other than iron

into these particles; heat-reducing the starting particles at a temperature of 350 to 700°C under a reducing gas atmosphere; and then subjecting the obtained particles to surface-oxidation treatment.

Meanwhile, the surface-oxidation treatment may be conducted in an oxygen-containing inert gas atmosphere. Examples of the inert gas may include nitrogen gas, helium gas, argon gas or the like. Among these inert gases, nitrogen gas is especially preferred. The oxygen content of the oxygen-containing inert gas atmosphere is preferably 0.1 to 5% by volume. Alternatively, it is preferred that the oxygen content is gradually increased until reaching a predetermined value.

Also, the inert gas atmosphere may contain water vapor. When the water vapor-containing inert gas atmosphere is used, the obtained magnetic metal particles containing iron as a main component tend to show a high coercive force value.

The surface-oxidation treatment is preferably conducted at a temperature of 40 to 200°C, more preferably 40 to 180°C. When the surface-oxidation treatment temperature is less than 40°C, it may be difficult to form a surface oxidation layer having a sufficient thickness, so that the obtained particles may tend to be remarkably deteriorated in magnetic properties when washed with water. When the surface-oxidation treatment temperature is more than 200°C, the obtained particles may suffer from considerable change in skeleton thereof, in particular, the minor axis diameter thereof may be extremely increased by a large amount of oxides produced, so that in worse cases, the skeleton of the particles may tend to be broken.

The thus obtained magnetic metal particles containing iron as a main component are coarsely crushed and then washed with water.

In the present invention, the water-washing is conducted by charging and dispersing the magnetic metal particles containing iron as a main component in water such that the particles are water-washed in the form of a water suspension. The water-washing is preferably continued until an electric conductivity of the filtrate as measured is reduced to not more than 10 μS/cm.

Water used for the water-washing may be ion-exchanged water. The higher water temperature is preferred because the soluble salt content can be further reduced. For example, the water temperature is preferably 40 to 95°C.

After the water-washing, a predetermined amount of polyether-modified polysiloxanes is added to the water suspension containing the magnetic metal particles containing iron as a main component, and the resultant mixture is stirred.

Prior to the addition of the polyether-modified polysiloxanes, the concentration of the magnetic metal particles contained in the water suspension is preferably adjusted to 1 to 500 g/liter.

The polyether-modified polysiloxanes used in the present invention may be at least one compound selected from the group consisting of those represented by the above formula (1).

The amount of the polyether-modified polysiloxanes added is usually 0.02 to 10 parts by weight (calculated as Si) based on 100 parts by weight of the magnetic metal particles containing iron as a main component, which are contained in the water suspension. When the amount of the polyether-modified polysiloxanes added is less than 0.02 parts by weight, the obtained particles may tend to be deteriorated in dispersibility and oxidation stability. When the amount of the polyether-modified polysiloxanes added is more than 10 parts by weight, the effect obtained by the addition of the polyether-modified polysiloxanes is already saturated and, therefore, it is unnecessary and meaningless to add the polyether-modified polysiloxanes in such a large amount. The amount of the polyether-modified polysiloxanes added is preferably 0.04 to 5 parts by weight.

In addition, when the amount of the polyether-modified polysiloxanes added is less than 0.02 parts by weight, since the surface tension of the slurry (water suspension) cannot be sufficiently reduced, it may be difficult to fully reduce the soluble salt content and improve the deagglomerating ability of the obtained composite magnetic metal particles containing iron as a main component.

After adding the polyether-modified polysiloxanes and then stirring the resultant water suspension, the resultant mixture is successively subjected to dehydration, filtration and drying by ordinary methods.

The thus obtained composite magnetic metal particles containing iron as a main component can maintain good magnetic properties even after the water-washing treatment. More specifically, the percentage of change in coercive force value between before and after the water-washing treatment is preferably not more than 5%, more preferably not more than 4.5%; and the percentage of change in saturation magnetization value therebetween is preferably not more than 5%, more preferably not more than 4.5%.

Next, the magnetic recording medium according to the present invention is described.

The magnetic recording medium according to the present invention is constituted by a non-magnetic base film, and a magnetic coating film formed on the non-magnetic base film, comprising a binder resin and magnetic composite particles containing iron as a main component.

As the non-magnetic base film, the following materials which are at present generally used for the production of a magnetic recording medium are usable as a raw material: a synthetic resin such as polyethylene terephthalate, polyethylene, polypropylene, polycarbonate, polyethylene naphthalate, polyamide, polyamideimide and polyimide; foil

and plate of a metal such as aluminum and stainless steel; and various kinds of paper. The thickness of the non-magnetic base film varies depending upon the material, but it is usually about 1.0 to 300 μm, preferably 2.0 to 200 μm.

In the case of a magnetic disc, polyethylene terephthalate is usually used as the non-magnetic base film. The thickness thereof is usually 50 to 300 μm, preferably 60 to 200 μm. In the case of a magnetic tape, when polyethylene terephthalate is used as the base film, the thickness thereof is usually 3 to 100 μm, preferably 4 to 20 μm. When polyethylene naphthalate is used, the thickness thereof is usually 3 to 50 μm, preferably 4 to 20 μm. When polyamide is used, the thickness thereof is usually 2 to 10 μm, preferably 3 to 7 μm.

As the binder resin used in the present invention, the following resins which are at present generally used for the production of a magnetic recording medium are usable: vinyl chloride-vinyl acetate copolymer, urethane resin, vinyl chloride-vinyl acetate-maleic acid copolymer, urethane elastomer, butadiene-acrylonitrile copolymer, polyvinyl butyral, cellulose derivative such as nitrocellulose, polyester resin, synthetic rubber resin such as polybutadiene, epoxy resin, polyamide resin, polyisocyanate, electron radiation curing acryl urethane resin and mixtures thereof.

Each of these resin binders may contain a functional group such as -OH, -COOH, $-SO_3M$, $-OPO_2M_2$ and $-NH_2$, wherein M represents H, Na or K. With the consideration of the dispersibility of the particles, a binder resin containing a functional group -COOH or $-SO_3M$ is preferable.

The thickness of the magnetic recording layer obtained by applying the magnetic coating composition on the surface of the non-magnetic base film and dried, is usually in the range of 0.01 to 5.0 μm, preferably 0.05 to 4.0 μm. If the thickness is less than 0.01 μm, uniform coating may be difficult, so that unfavorable phenomenon such as unevenness on the coating surface is observed. On the other hand, when the thickness exceeds 5.0 μm, it may be difficult to obtain desired electromagnetic performance due to an influence of diamagnetism.

The mixing ratio of the magnetic composite particles with the binder resin is usually 5 to 2000 parts by weight, preferably 100 to 1000 parts by weight based on 100 parts by weight of the binder resin.

When the amount of the blended magnetic composite particles containing iron as a main component is less than 5 parts by weight, the amount of the magnetic composite particles containing iron as a main component, which are contained in the magnetic coating composition is too small. As a result, there may not be formed a coating film in which the magnetic composite particles containing iron as a main component are continuously dispersed, and the surface smoothness of the coating film and the strength of the magnetic substrate may become insufficient. When the amount of the blended magnetic composite particles containing iron as a main component is more than 2,000 parts by weight, the amount of the magnetic composite particles containing iron as a main component becomes too large as compared to that of the binder resin, thereby failing to sufficiently disperse the magnetic composite particles containing iron as a main component in the magnetic coating composition. As a result, it may be difficult to form a coating film having a sufficiently smooth surface. Further, the magnetic composite particles containing iron as a main component may not be sufficiently bound together by the binder resin, so that the obtained coating film becomes brittle.

A lubricant, a polishing agent, an antistatic agent, etc. which are generally used for the production of a magnetic recording medium, may be added to the magnetic recording layer in amount of usually 0.1 to 50 parts by weight based on 100 parts by weight of the binder resin.

The magnetic recording medium of the present invention has a coercive force value of preferably 63.7 to 278.5 kA/m (800 to 3,500 Oe), more preferably 71.6 to 278.5 kA/m (900 to 3,500 Oe); a squareness (residual magnetic flux density Br/saturation magnetic flux density Bm) of preferably 0.85 to 0.95, more preferably 0.86 to 0.95; a gloss of coating film of preferably 195 to 300%, more preferably 200 to 300%; a surface roughness Ra of coating film of preferably not more than 8.5 nm, more preferably 2.0 to 8.0 nm, still more preferably 2.0 to 7.5 nm; and a Young's modulus (relative value to a commercially available video tape: and AV T-120 produced by Victor Company of Japan, Limited) of preferably 130 to 160, more preferably 132 to 160. As to the storage stability of the magnetic recording medium, the percentage of change in coercive force value thereof is preferably not more than 7%, more preferably not more than 5%; and the percentage of change in saturation magnetization value thereof is preferably not more than 7%, more preferably not more than 5%.

A non-magnetic undercoat layer comprising a binder resin and the non-magnetic particles, may be disposed between the non-magnetic base film and the magnetic recording layer.

As the non-magnetic particles for the non-magnetic undercoat layer, there may be used non-magnetic inorganic particles incorporated into a non-magnetic undercoat layer of ordinary magnetic recording media. Specific examples of the non-magnetic particles may include hematite particles, iron oxide hydroxide particles, titanium oxide particles, zinc oxide particles, tin oxide particles, tungsten oxide particles, silicon dioxide particles, α-alumina particles, β-alumina particles, γ-alumina particles, chromium oxide particles, cerium oxide particles, silicon carbide particles, titanium carbide particles, silicon nitride particles, boron nitride particles, calcium carbonate particles, barium carbonate particles, magnesium carbonate particles, strontium carbonate particles, calcium sulfate particles, barium sulfate particles, molybdenum disulfide particles, barium titanate particles or the like. These non-magnetic particles may be used alone or in combination of any two or more thereof. Among these non-magnetic particles, hematite particles, iron oxide hydroxide particles and titanium oxide particles, etc., are preferred.

Upon the production of a non-magnetic coating composition, the surface of the non-magnetic particles may be coated, if required, with at least one selected from the group consisting of hydroxides of aluminum, oxides of aluminum, hydroxides of silicon, oxides of silicon or the like in order to improve a dispersibility in vehicles. In addition, in order to improve various properties of the obtained magnetic recording media such as light transmittance, surface resistivity, mechanical strength, surface smoothness, durability and the like, various elements such as Al, Ti, Zr, Mn, Sn, Sb, etc., may be incorporated into the non-magnetic particles according to requirements.

The non-magnetic particles may have various shapes, and may include, for example, granular particles such as spherical particles, granular particles, octahedral particles, hexahedral particles and polyhedral particles; acicular particles such as needle-shaped particles, spindle-shaped particles and rice ball-shaped particles; plate-shaped particles; or the like. In the consideration of good surface smoothness of the obtained magnetic recording media, the use of acicular non-magnetic particles is preferred.

The non-magnetic particles of a granular shape have an average particle diameter of usually 0.01 to 0.3 μm, preferably 0.02 to 0.2 μm. The non-magnetic particles of an acicular shape have an average major axis diameter of usually 0.01 to 0.3 μm, preferably 0.02 to 0.2 μm. The non-magnetic particles of a plate shape have an average plate surface diameter of usually 0.01 to 0.3 μm, preferably 0.02 to 0.2 μm.

The acicular non-magnetic particles have an aspect ratio of usually 2:1 to 20:1, preferably 3:1 to 10:1; and the plate-shaped non-magnetic particles have a plate ratio of usually 2:1 to 50:1, preferably 3:1 to 10:1.

The non-magnetic undercoat layer of the present invention has a film thickness of preferably 0.2 to 10.0 μm. When the thickness of the non-magnetic undercoat layer is less than 0.2 μm, it may be difficult to improve the surface roughness of the non-magnetic base film. In the consideration of reduction in thickness of the obtained magnetic recording medium and surface smoothness of the non-magnetic undercoat layer, the thickness of the non-magnetic undercoat layer is more preferably in the range of 0.5 to 5.0 μm.

As the binder resin for the non-magnetic undercoat layer, the same binder resin as that used for the production of the magnetic recording layer is usable.

The mixing ratio of the non-magnetic particles with the binder resin is usually 5 to 2000 parts by weight, preferably 100 to 1000 parts by weight based on 100 parts by weight of the binder resin.

When the amount of the non-magnetic particles blended is less than 5 parts by weight, the amount of the non-magnetic particles contained in the non-magnetic coating composition is too small. As a result, there may not be formed a coating film in which the non-magnetic particles are continuously dispersed, and the surface smoothness of the coating film and the stiffness of the non-magnetic substrate may become insufficient. When the amount of the non-magnetic particles blended is more than 2,000 parts by weight, the amount of the non-magnetic particles becomes too large as compared to that of the binder resin, thereby failing to sufficiently disperse the non-magnetic particles in the non-magnetic coating composition. As a result, it may be difficult to form a coating film having a sufficiently smooth surface. Further, the non-magnetic particles may not be sufficiently bound together by the binder resin, so that the obtained coating film becomes brittle.

A lubricant, a polishing agent, an antistatic agent, etc. which are generally used for the production of a magnetic recording medium may be added to the non-magnetic undercoat layer in amount of usually 0.1 to 50 parts by weight based on 100 parts by weight of the binder resin.

The non-magnetic undercoat layer of the present invention has a gloss of coating film of preferably 176 to 300%, more preferably 180 to 300%, still more preferably 184 to 300%; a surface roughness Ra of coating film of preferably 0.5 to 8.5 nm, more preferably 0.5 to 8.0 nm; and a Young's modulus (relative value to a commercially available video tape: and AV T-120 produced by Victor Company of Japan, Limited) (coating film) of preferably 124 to 160, more preferably 126 to 160.

The magnetic recording medium having a non-magnetic undercoat layer according to the present invention has a coercive force value of preferably 63.7 to 278.5 kA/m (800 to 3,500 Oe), more preferably 71.6 to 278.5 kA/m (900 to 3,500 Oe); a squareness (residual magnetic flux density Br/saturation magnetic flux density Bm) of preferably 0.85 to 0.95, more preferably 0.86 to 0.95; a gloss of coating film of preferably 200 to 300%, more preferably 205 to 300%; a surface roughness Ra of coating film of preferably not more than 8.0 nm, more preferably 2.0 to 7.5 nm, still more preferably 2.0 to 7.0 nm; and a Young's modulus (relative value to a commercially available video tape: and AV T-120 produced by Victor Company of Japan, Limited) of preferably 132 to 160, more preferably 134 to 160. As to the storage stability of the magnetic recording medium having a non-magnetic undercoat layer, the percentage of change in coercive force value thereof is preferably not more than 7%, more preferably not more than 5%; and the percentage of change in saturation magnetization value thereof is preferably not more than 7%, more preferably not more than 5%.

The point of the present invention is that by washing the magnetic metal particles containing iron as a main component with water and then surface-treating with polyether-modified polysiloxanes, the obtained composite magnetic metal particles containing iron as a main component can exhibit an excellent dispersibility, a less soluble salt content and an excellent oxidation stability while maintaining good magnetic properties.

In the present invention, since the magnetic metal particles containing iron as a main component, which are

stabilized by the surface-oxidation treatment, are washed with water in the form of a water suspension, it is possible to more effectively reduce the soluble sodium salt content as compared to such cases where goethite particles or hematite particles as starting products are washed with water in the course of the production process.

Further, as is apparent from the below-mentioned preliminary experiment, the surface tension of the aqueous solution can be reduced by adding polyether-modified polysiloxanes thereto, resulting in improved efficiency of washing out the water-soluble salts. Further, since the surface tension of the water suspension containing the magnetic metal particles containing iron as a main component after the water-washing can also be reduced by adding polyether-modified polysiloxanes thereto, it is possible to prevent the particles from being agglomerated together and obtain readily-deagglomerable composite magnetic metal particles containing iron as a main component. Meanwhile, although the surface tension of the aqueous solution can also be reduced by adding alcohol thereto, the alcohol must be added in an amount as large as not less than 10% by weight in order to reduce the surface tension to 45 mN/m or less. In addition, the water-soluble salts are insoluble in organic solvents, and the solubility of the water-soluble salts in alcohol-containing aqueous solution is lowered because of the interaction between alcohol and water, i.e., by the formation of hydrogen bond therebetween, so that the efficiency of water-washing the soluble salts tends to be further deteriorated. Therefore, when alcohol is added to the aqueous solution, it may be difficult to reduce the soluble salt content as aimed by the present invention. On the contrary, in the present invention, since the effect of the present invention can be attained only by adding a small amount of the polyether-modified polysiloxanes to the water suspension, it is possible to effectively reduce the water-soluble salt content.

The reason why the composite magnetic metal particles containing iron as a main component according to the present invention can exhibit an excellent oxidation stability, is considered as follows. That is, since the soluble sodium salt content is minimized and the surface of the particles is treated with the polyether-modified polysiloxanes, the obtained composite magnetic metal particles containing iron as a main component can be prevented from being oxidized.

Further, when the composite magnetic metal particles containing iron as a main component, which are improved in oxidation stability, are used as magnetic particles, the obtained magnetic recording medium can also exhibit an excellent storage stability.

In accordance with the present invention, it is possible to obtain composite magnetic metal particles containing iron as a main component, which are capable exhibiting not only an excellent dispersibility, but also an excellent oxidation stability due to a less soluble salt content, while maintaining good magnetic properties.

In addition, since the magnetic recording medium produced by using the composite magnetic metal particles containing iron as a main component according to the present invention has a high coercive force value and an excellent dispersion condition, it is possible to provide a magnetic recording medium exhibiting not only a high-density recording property and high output characteristics, but also an improved storage stability.

## EXAMPLES

The present invention is described in more detail by Examples and Comparative Examples, but the Examples are only illustrative and, therefore, not intended to limit the scope of the present invention.

Various properties were evaluated by the following methods.

(1) The average major axis diameter and average minor axis diameter of magnetic particles, composite magnetic metal particles and non-magnetic particles were respectively expressed by average values (measured in a predetermined direction) of about 350 particles which were sampled from a micrograph obtained by magnifying an original electron micrograph (x 30,000) by four times in each of the longitudinal and transverse directions.

(2) The aspect ratio of the particles was expressed by a ratio of average major axis diameter to average minor axis diameter thereof.

(3) The geometrical standard deviation of major axis diameters was expressed by values obtained by the following method. That is, the major axis diameters were measured from the above-magnified photograph. The actual major axis diameters and the number of the particles were obtained from the calculation on the basis of the measured values. On a logarithmic normal probability paper, the major axis diameters were plotted at regular intervals on the abscissa-axis and the accumulative number of particles belonging to each interval of the major axis diameters were plotted by percentage on the ordinate-axis by a statistical technique. The major axis diameters corresponding to the number of particles of 50 % and 84.13 %, respectively, were read from the graph, and the geometrical standard deviation was measured from the following formula:

Geometrical standard deviation = {major axis diameter corresponding to 84.13 % under integration sieve}/{major axis diameter (geometrical average diameter) corresponding to 50 % under integration sieve}

The more the geometrical standard deviation nears 1.0, the more excellent the major axis diameter distribution of the particles.

(4) The specific surface area was expressed by values measured by a BET method.

(5) The amounts of Co, Al and rare earth elements contained within magnetic metal particles containing iron as a main component, and the amount of Si contained in a polyether-modified polysiloxane coat of the composite magnetic metal particles containing iron as a main component, were respectively measured by a fluorescent X-ray spectroscopy device 3063M (manufactured by RIGAKU DENKI KOGYO CO., LTD.) according to JIS K0119 "General rule of fluorescent X-ray analysis".

(6) The soluble sodium salt content of the magnetic metal particles containing iron as a main component and the composite magnetic metal particles containing iron as a main component was determined as follows. That is, 5 g of sample particles were weighed and charged into a 300-ml conical flask. After adding 100 ml of boiling pure water, the contents of the flask were heated and held in a boiling state for about 5 minutes. Then, the flask was plugged and allowed to stand for cooling to ordinary temperature. The flask was charged with water in an amount corresponding to evaporation loss thereof, and then plugged again and shaken for one minute. After allowing the contents of the flask to stand for 5 minutes, the obtained supernatant was filtered through a filter paper No. 5C. Then, the resultant filtrate was measured using an inductively coupled high-frequency plasma atomic emission spectroscope (manufactured by Seiko Denshi Kogyo Co., Ltd.) to determine the $Na^+$ concentration thereof.

(7-1) The deagglomerating ability of the composite magnetic metal particles containing iron as a main component was evaluated as follows. That is, the composite magnetic metal particles containing iron as a main component were crushed or squashed with fingers or using a roller to obtain the feeling upon crushing. The results were classified into the following five ranks:

| | |
|---|---|
| Rank 5 | Readily crushable with fingers, and no grains remained; |
| Rank 4 | Crushable with fingers, and few grains remained; |
| Rank 3 | Crushable with fingers, but many grains remained; |
| Rank 2 | Crushable only using a roller, and few grains remained; and |
| Rank 1 | Crushable only using a roller, but many grains remained. |

(7-2) Measuring method of deagglomerating ability (based on particle size distribution):

The deagglomerating ability of the composite magnetic metal particles containing iron as a main component was determined by the following method. That is, after pellets obtained by shaping and drying the composite magnetic metal particles containing iron as a main component, were granulated, the obtained granulated particles were passed through a sieve, and the particle size distribution of the granulated particles having particle diameters of 500 to 1,000 µm was measured under a pressure of 1 bar using a laser-diffraction-type particle size distribution-measuring device "Model HELOSLA/KA" (manufactured by SYMPATEC Co., Ltd.). The deagglomerating ability was expressed by an average particle diameter and a content of particles having a particle diameter of not more than 10 µm on the basis of the thus measured particle size distribution. The smaller the average particle diameter and the larger the content of particles having a particle diameter of not more than 10 µm, the more excellent the deagglomerating ability of the composite magnetic metal particles containing iron as a main component.

(8) The magnetic properties of the magnetic metal particles containing iron as a main component and the composite magnetic metal particles containing iron as a main component as well as various properties of the magnetic tape, were respectively measured using a vibration sample magnetometer "VSM-3S-15" (manufactured by Toei Kogyo Co., Ltd.) by applying an external magnetic field of 795.8 kA/m (10 kOe) thereto.

(9) The oxidation stability of the magnetic metal particles containing iron as a main component and the composite

magnetic metal particles containing iron as a main component was determined as follows. That is, sample particles were allowed to stand at a temperature of 60°C and a relative humidity of 90% for 15 days to measure coercive force values thereof before and after the standing test. From the measured values, the amount of change in coercive force value between before and after the standing test was calculated, and the oxidation stability was expressed by the percentage obtained by dividing the change amount by the coercive force value before the standing test.

The change in magnetic properties of the particles between before and after the water-washing treatment was expressed by the percentages obtained by dividing the amounts of change in coercive force value and saturation magnetization value therebetween by the respective values before the water-washing treatment.

The storage stability of the magnetic recording medium was determined as follows. That is, the magnetic recording medium was allowed to stand at a temperature of 60°C and a relative humidity of 90% for 15 days to measure coercive force values and saturation magnetization values thereof before and after the standing test and calculate the amounts of change therebetween. The storage stability of the magnetic recording medium was expressed by the percentages obtained by dividing the amounts of change in coercive force value and saturation magnetization value between before and after the standing test by the respective values before the standing test.

(10) The viscosity of the coating composition was obtained by measuring the viscosity of the coating composition at 25°C at a shear rate D of 1.92 $sec^{-1}$ by using "E type viscometer EMD-R" (manufactured by TOKYO KEIKI, CO., LTD.).

(11) The gloss of surface of the coating film was measured at an angle of incidence of 45° using a gloss meter "UGV-5D" (manufactured by SUGA SHIKENKI, CO., LTD.), and expressed by the percentage calculated based on a gloss of a standard plate which was assumed to be 86.3%.

(12) The surface roughness Ra is expressed by the center-line average roughness of the surface of the coating film by using "Surfcom-575A" (manufactured by TOKYO SEIMITSU CO., LTD.).

(13) The strength of the coating film was expressed the Young's modulus obtained by "Autograph" (produced by SHIMAZU SEISAKUSHO Co., Ltd.). The Young's modulus was expressed by the ratio of the Young's modulus of the coating film to that of a commercially available video tape "AV T-120" (produce by VICTOR COMPANY OF JAPAN, LIMITED). The higher the relative value, the more the strength of the coating film is favorable.

(14) The thickness of each of the base film, the non-magnetic undercoat layer and the magnetic recording layer constituting the magnetic recording medium was measured in the following manner by using "Digital Electronic Micrometer R351C" (manufactured by ANRITSU CORP.)

The thickness (A) of a non-magnetic base film was first measured. Similarly, the thickness (B) (B = the sum of the thicknesses of the non-magnetic base film and the non-magnetic undercoat layer) of a non-magnetic substrate obtained by forming a non-magnetic undercoat layer on the non-magnetic base film was measured. Furthermore, the thickness (C) (C = the sum of the thicknesses of the non-magnetic base film, the non-magnetic undercoat layer and the magnetic recording layer) of a magnetic recording medium obtained by forming a magnetic recording layer on the non-magnetic substrate was measured. The thickness of the non-magnetic undercoat layer is expressed by (B) - (A), and the thickness of the magnetic recording layer is expressed by (C) - (B).

Alternatively, the thickness of each of the non-magnetic base film and the magnetic recording layer constituting the magnetic recording medium was measured in the following manner. The thickness (A) of a non-magnetic base film was first measured, and the thickness (C) (C = the sum of the thicknesses of the non-magnetic base film and the magnetic recording layer) of a magnetic recording medium obtained by forming a magnetic recording layer on the non-magnetic base film was measured. The thickness of the magnetic recording layer is expressed by (C) - (A).

(15) The surface tension of aqueous solution was determined using a Denui surface tensiometer (manufactured by NIPPON OIL SHIKENKI KOGYO CO., LTD.) as follows. That is, 15 ml of an aqueous solution to be measured was filled in a 20-ml petri dish, and a fine platinum ring was immersed in the aqueous solution. The platinum ring was lifted up from the aqueous solution to measure a force required for releasing the ring from the surface of the aqueous solution using the surface tensiometer. The surface tension was obtained by inserting the measured value into the following formula:

$$\text{Surface Tension (mN/m)} = To \times (T_2/T_1)$$

wherein $T_0$ is 72.0 mN/m (surface tension of water at 25°C); $T_1$ is 68.2° (measured value of water at 25°C); and $T_2$ is a measured value of the test solution at 25°C.

Example 1:

<Production of composite magnetic metal particles containing iron as a main component>

10 kg of magnetic acicular metal particles containing iron as a main component which were previously subjected to surface oxidation treatment (particle shape: spindle shape; average major axis diameter: 0.121 µm; average minor axis diameter: 0.0195 µm; aspect ratio: 6.2:1; geometrical standard deviation value: 1.42; BET specific surface area value: 46.3 $m^2/g$; coercive force value: 149.3 kA/m (1,876 Oe); saturation magnetization value: 131.3 $Am^2/kg$ (131.3 emu/g); percentage of change in coercive force value: 22.6%; percentage of change in saturation magnetization value: 19.4%; soluble sodium salt content: 265 ppm; Co content: 2.10% by weight; Al content: 0.70% by weight; Nd content: 1.31% by weight) were added into 100 liters of pure water, thereby obtaining a slurry containing the magnetic metal particles containing iron as a main component.

The slurry containing the magnetic metal particles containing iron as a main component was concentrated using a filter thickener, and water-washed by passing pure water therethrough until the electric conductivity of the resultant filtrate was reduced to 10 µS/cm or less.

Then, pure water was added to the slurry containing the magnetic metal particles containing iron as a main component to adjust the slurry concentration to 100 g/liter. Thereafter, 80 liters of the slurry was mixed with 80 g of polyether-modified polysiloxane (tradename: "BYK-080" produced by BYK Chemie Japan, Co., Ltd.), and then stirred for 15 minutes.

The resultant slurry containing the magnetic metal particles containing iron as a main component which were surface-coated with the polyether-modified polysiloxane, was filtered, and the obtained solids were dried at 60°C for 12 hours using a dryer under a nitrogen flow, thereby obtaining composite magnetic metal particles containing iron as a main component.

The thus obtained composite magnetic metal particles containing iron as a main component were of a spindle shape, and had an average major axis diameter of 0.121 µm, an average minor axis diameter of 0.0195 µm, an aspect ratio of 6.2:1, a geometrical standard deviation value of 1.42, a BET specific surface area value of 41.9 $m^2/g$, a coercive force value of 145.0 kA/m (1,822 Oe), a saturation magnetization value of 128.4 $Am^2/kg$ (128.4 emu/g), and a soluble sodium salt content of 7 ppm. As to the oxidation stability of the composite magnetic metal particles, the percentage of change in coercive force value was 7.1%, and the percentage of change in saturation magnetization value was 5.8%. In addition, the composite magnetic metal particles exhibited a deagglomerating ability (based on crush test) of Rank 5, a Co content of 2.08% by weight, an Al content of 0.69% by weight, and a Nd content of 1.28% by weight. Further, as to the deagglomerating ability based on particle size distribution, the average particle size obtained from the measured particle size distribution was 1.18 µm, and the content of particles having a particle diameter of not more than 10 µm obtained from the measured particle size distribution was 96.5%. In addition, it was confirmed that the amount of the polyether-modified polysiloxane coat formed on the magnetic metal particles was 0.24% by weight (calculated as Si), and that the percentage of change in coercive force value of the particles between before and after the water-washing treatment was 2.9% and the percentage of change in saturation magnetization value therebetween was 2.2%.

Meanwhile, since the surface tension of the water suspension containing the magnetic metal particles containing iron as a main component could not be directly measured, the following preliminary experiment was conducted. That is, 80 mg of the polyether-modified polysiloxane was added to 80 ml of pure water to prepare a solution. The thus prepared solution was tested to measure the surface tension thereof. As a result, it was confirmed that the surface tension of the solution was 44.0 mN/m and, therefore, considerably low as compared to the surface tension of water (72.0 mN/m).

<Production of magnetic recording medium>

100.0 parts by weight of the above obtained composite magnetic metal particles containing iron as a main component, 10.0 parts by weight of vinyl chloride-vinyl acetate copolymer resin (tradename: "MR-110" produced by Nippon Zeon Co., Ltd.), 23.3 parts by weight of cyclohexanone, 10.0 parts by weight of methyl ethyl ketone, 1.0 part by weight of fine carbon black particles (produced by Mitsubishi Kagaku Co., Ltd.; average particle diameter: 26 nm; BET specific surface area value: 130 $m^2/g$) and 7.0 parts by weight of alumina particles ("AKP-30" produced by Sumitomo Kagaku Co., Ltd.; average particle diameter: 0.4 µm) were kneaded with each other for 20 minutes using a kneader. The obtained kneaded material was diluted by adding 79.6 parts by weight of toluene, 110.2 parts by weight of methyl ethyl ketone and 17.8 parts by weight of cyclohexanone thereto, and then mixed and dispersed for 3 hours

using a sand grinder, thereby obtaining a dispersion.

33.3 parts by weight of a solution prepared by dissolving 10 parts by weight of a polyurethane resin (as solid content) in a mixed solvent of methyl ethyl ketone and toluene (1:1) was added to the dispersion, and then mixed and dispersed for 30 minutes using a sand grinder. Then, after the resultant mixture was passed through a 1μm-mesh filter, the obtained filter cake was mixed with 12.1 parts by weight of a solution prepared by dissolving 1.0 part by weight of myristic acid and 3.0 parts by weight of butyl stearate in a mixed solvent of methyl ethyl ketone, toluene and cyclohexanone (5:3:2), and 15.2 parts by weight of a solution prepared by dissolving 5.0 parts by weight of a trifunctional low-molecular weight polyisocyanate (tradename: "E-31" produced by Takeda Yakuhin Kogyo Co., Ltd.) in a mixed solvent of methyl ethyl ketone, toluene and cyclohexanone (5:3:2), while stirring, thereby obtaining a magnetic coating material.

The thus obtained magnetic coating material had the following composition.

| | |
|---|---|
| Composite magnetic metal particles containing iron as a main component | 100.0 parts by weight |
| Vinyl chloride-vinyl acetate copolymer resin | 10.0 parts by weight |
| Polyurethane resin | 10.0 parts by weight |
| Alumina particles | 7.0 parts by weight |
| Fine carbon black particles | 1.0 part by weight |
| Myristic acid | 1.0 part by weight |
| Butyl stearate | 3.0 parts by weight |
| Trifunctional low-molecular weight polyisocyanate | 5.0 parts by weight |
| Cyclohexanone | 56.6 parts by weight |
| Methyl ethyl ketone | 141.5 parts by weight |
| Toluene | 85.4 parts by weight |

The thus obtained magnetic coating material had a viscosity of 8,159 cP.

The above-obtained coating material was passed though a 1μm-mesh filter, applied onto a 12μm-thick polyethylene terephthalate film using a slit coater having a gap width of 45 μm, and then dried, thereby forming a magnetic layer. The thus formed magnetic layer was subjected to calender treatment by an ordinary method to smoothen the surface thereof. Then, the thus obtained film was cut into a width of 1.27 cm (1/2 inch), and then the resultant tape was allowed to stand at 60°C for 24 hours in a curing oven for sufficiently curing the magnetic layer, thereby obtaining a magnetic tape. The thus obtained magnetic tape had a 3.5 μm-thick coating film.

As to the magnetic properties of the obtained magnetic tape, the coercive force value thereof was 155.3 kA/m (1,951 Oe); the squareness (Br/Bm) thereof was 0.89; the gloss thereof was 220%; the surface roughness Ra thereof was 6.1 nm; and the Young's modulus thereof was 134. As to the storage stability of the magnetic tape, the percentage of change in coercive force value thereof was 3.6%, and the percentage of change in saturation magnetization value thereof was 4.1%.

Magnetic particles (a) to (c):

As magnetic particles, there were prepared magnetic metal particles containing iron as a main component which had properties shown in Table 1.

Examples 2 to 4 and Comparative Examples 1 and 2:

Composite magnetic metal particles containing iron as a main component were produced by the same method as defined in Example 1 except that kind of magnetic particles, use or non-use of polyether-modified polysiloxanes, and amount of the polyether-modified polysiloxanes added were changed variously.

Main production conditions are shown in Table 2, and various properties of the obtained composite magnetic metal particles containing iron as a main component are shown in Table 3. Meanwhile, the surface tension of water shown in Table 2 is the value of surface tension of a solution prepared by adding a predetermined amount of polyether-modified polysiloxanes to 100 parts by weight of water.

Comparative Example 3:

11.0 kg of the magnetic particles (a) were charged into an edge runner "MPUV-2 Model" (tradename, manufactured by MATSUMOTO CHUZO TEKKOSHO CO., LTD.). Then, 110 g of polyether-modified polysiloxane (tradename: "BYK-080", produced by BYK Chemie Japan, Co., Ltd.) was added to the magnetic particles (a) while operating

the edge runner. The obtained mixture was mixed and stirred at a linear load of 294 N/cm (30 Kg/cm) for 20 minutes, and then dried at 80°C for 60 minutes using a dryer, thereby obtaining magnetic metal particles containing iron as a main component which were surface-coated with polyether-modified polysiloxane. Meanwhile, the surface-coating treatment was conducted under a nitrogen flow. It was confirmed that the thus obtained coated magnetic metal particles containing iron as a main component had a polyether-modified polysiloxane coat in an amount of 0.24% by weight (calculated as Si).

Comparative Example 4:

An aqueous mixed alkali solution containing ammonium hydrogen carbonate and aqueous ammonia was reacted with an aqueous ferrous sulfate solution, thereby obtaining a suspension containing a ferrous-containing precipitate. The resultant suspension containing the ferrous-containing precipitate was subjected to oxidation reaction by passing air therethrough, thereby obtaining goethite particles having a soluble sodium salt content of not more than 3 ppm. Thereafter, the obtained goethite particles were dehydrated at 300°C in air, and then heat-dehydrated at 600°C under the same atmosphere, thereby obtaining spindle-shaped hematite particles. The thus obtained spindle-shaped hematite particles were heat-reduced at 600°C under a reducing gas atmosphere, and then subjected to surface-oxidation treatment, thereby obtaining magnetic metal particles containing iron as a main component which had a soluble sodium salt content of 5 ppm.

Various properties of the obtained magnetic metal particles containing iron as a main component are shown in Table 3.

Examples 5 to 7 and Comparative Examples 5 to 9:

<Production of magnetic recording medium>

Magnetic recording medium were produced by the same method as defined in Example 1 except that kind of magnetic particles were changed variously.

Main production conditions and various properties of the obtained magnetic recording medium are shown in Table 4.

<Production of non-magnetic undercoat layer>

Non-magnetic particles 1 to 6:

Various properties of non-magnetic particles are shown in Table 5.

Undercoat layer 1:

12 g of hematite particles as the non-magnetic particles 1 shown in Table 5 were mixed with a binder resin solution (containing 30% by weight of a vinyl chloride-vinyl acetate copolymer resin having a sodium sulfonate group, and 70% by weight of cyclohexanone) and cyclohexanone, thereby obtaining a mixture having a solid content of 72%. The resultant mixture was further kneaded for 30 minutes using a plast-mill, thereby obtaining a kneaded material.

The thus obtained kneaded material together with 95 g of 1.5mmϕ glass beads, an additional binder resin solution (comprising 30% by weight of a polyurethane resin having a sodium sulfonate group and 70% by weight of a mixed solvent containing methyl ethyl ketone and toluene at a mixing ratio of 1:1), cyclohexanone, methyl ethyl ketone and toluene, were charged into a 140-ml glass bottle. The resultant mixture was mixed and dispersed for 6 hours using a paint shaker, thereby obtaining a coating material. Then, the obtained coating material was further mixed with a lubricant, and the resultant mixture was mixed and dispersed for 15 minutes using a paint shaker.

The obtained non-magnetic coating material had the following composition.

| Composition of non-magnetic coating material: | |
|---|---|
| Non-magnetic particles | 100 parts by weight |
| Vinyl chloride-vinyl acetate copolymer resin having a sodium sulfonate group | 10 parts by weight |
| Polyurethane resin having a sodium sulfonate group | 10 parts by weight |
| Lubricant (myristic acid: butyl stearate = 1:1) | 2 parts by weight |
| Cyclohexanone | 56.9 parts by weight |

(continued)

| Composition of non-magnetic coating material: | |
|---|---|
| Methyl ethyl ketone | 142.3 parts by weight |
| Toluene | 85.4 parts by weight |

Then, the obtained non-magnetic coating material was applied onto a 12 μm-thick polyethylene terephthalate film using a slit coater, and then dried, thereby forming a non-magnetic undercoat layer on the film.
Main production conditions and various properties of the obtained non-magnetic undercoat layer are shown in Table 6.

Undercoat layers 2 to 6:

The same procedure as defined above for production of the undercoat layer 1 was conducted except that kind of non-magnetic particles were changed variously, thereby obtaining non-magnetic undercoat layers.
Main production conditions and various properties of the obtained non-magnetic undercoat layers are shown in Table 6.

Example 8:

<Production of magnetic recording medium having a non-magnetic undercoat layer>

The magnetic coating material was produced by the same method as defined in Example 1 except that the composite magnetic metal particles containing iron as a main component, which were obtained in Example 1, were used.
The obtained magnetic coating material was applied onto the undercoat layer 1 using a slit coater, thereby forming a magnetic coating layer having a thickness of 15 μm thereon. Successively, the obtained coating layer was magnetically oriented in a magnetic field and then dried. Then, the obtained film was slit into a width of 1.27 cm (0.5 inch), and subjected to calender treatment and then to curing reaction at 60°C for 24 hours, thereby obtaining a magnetic tape.
Main production conditions and various properties of the obtained magnetic recording medium are shown in Table 7.

Examples 9 to 13 and Comparative Examples 10 to 14:

The same procedure as defined in Example 8 was conducted except that kind of non-magnetic undercoat layer and kind of magnetic particles were changed variously, thereby obtaining magnetic recording medium.
Main production conditions and various properties of the obtained magnetic recording medium are shown in Table 7.

Table 1

| Magnetic particles | Kind of magnetic particles | Properties of magnetic metal particles containing iron as a main component |
|---|---|---|
| | | Particle shape |
| Magnetic particles (a) | Magnetic metal particles containing iron as a main component (Co content: 7.3 wt. %; Al content: 3.2 wt. % Nd content: 2.6 wt. %) | Spindle-shaped |
| Magnetic particles (b) | Magnetic metal particles containing iron as a main component (Co content: 20.3 wt. %; Al content: 4.6 wt. % Y content: 6.8 wt. %) | Spindle-shaped |
| Magnetic particles (c) | Magnetic metal particles containing iron as a main component (Co content: 1.3 wt. %; Al content: 3.2 wt. %) | Acicular |

Table 1 (continued)

| Magnetic particles | Properties of magnetic metal particles containing iron as a main component | | | |
|---|---|---|---|---|
| | Average major axis diameter (μm) | Average minor axis diameter (μm) | Aspect ratio (-) | Geometrical standard deviation value (-) |
| Magnetic particles (a) | 0.103 | 0.0125 | 8.2:1 | 1.38 |
| Magnetic particles (b) | 0.072 | 0.0111 | 6.5:1 | 1.41 |
| Magnetic particles (c) | 0.203 | 0.0239 | 8.5:1 | 1.44 |

Table 1 (continued)

| Magnetic particles | Properties of magnetic metal particles containing iron as a main component | | |
|---|---|---|---|
| | BET specific surface area value ($m^2/g$) | Magnetic properties | |
| | | Coercive force value (kA/m) | Saturation magnetization value ($Am^2/kg$) |
| Magnetic particles (a) | 48.6 | 145.3 | 136.5 |
| Magnetic particles (b) | 53.2 | 179.1 | 141.2 |
| Magnetic particles (c) | 40.9 | 128.4 | 131.6 |

Table 1 (continued)

| Magnetic particles | Properties of magnetic metal particles containing iron as a main component | | |
|---|---|---|---|
| | Soluble Na salt content (ppm) | Oxidation stability | |
| | | Percentage of change in coercive force value (%) | Percentage of change in saturation magnetization value (%) |
| Magnetic particles (a) | 211 | 18.3 | 21.2 |
| Magnetic particles (b) | 158 | 14.3 | 18.6 |
| Magnetic particles (c) | 336 | 21.2 | 16.5 |

Table 2

| Examples and Comparative Examples | Kind of Magnetic particles | Water-washing treatment |
|---|---|---|
| | | Polyether-modified polysiloxanes |
| | | Kind |
| Example 2 | Magnetic particles (a) | BYK-080 |
| Example 3 | Magnetic particles (b) | BYK-080 |
| Example 4 | Magnetic particles (c) | BYK-080 |
| Comparative Example 1 | Magnetic particles (a) | BYK-080 |
| Comparative Example 2 | Magnetic particles (a) | - |

Table 2 (continued)

| Examples and Comparative Examples | Water-washing treatment | |
|---|---|---|
| | Polyether-modified polysiloxanes | |
| | Amount added (based on magnetic particles) (wt. part) | Amount added (based on water) (wt. part) |
| Example 2 | 1.0 | 0.1 |
| Example 3 | 5.0 | 0.5 |
| Example 4 | 10.0 | 0.9 |
| Comparative Example 1 | 0.01 | 0.008 |
| Comparative Example 2 | - | - |

Table 2 (continued)

| Examples and Comparative Examples | Water-washing treatment | |
|---|---|---|
| | Polyether-modified polysiloxanes | |
| | Surface tension after addition (mN/m) | Coating amount (calculated as Si) (wt. %) |
| Example 2 | 44.5 | 0.23 |
| Example 3 | 41.2 | 1.14 |
| Example 4 | 40.0 | 2.17 |
| Comparative Example 1 | 68.4 | 0.002 |
| Comparative Example 2 | 72.0 | - |

Table 2 (continued)

| Examples and Comparative Examples | Water-washing treatment | |
|---|---|---|
| | Percentage of change in coercive force value between before and after water-washing treatment (%) | Percentage of change in saturation magnetization value between before and after water-washing treatment (%) |
| Example 2 | 3.1 | 2.9 |
| Example 3 | 3.0 | 2.6 |
| Example 4 | 2.5 | 2.3 |
| Comparative Example 1 | 5.2 | 5.3 |
| Comparative Example 2 | 6.6 | 6.8 |

Table 3

| Examples and Comparative Examples | Properties of composite magnetic metal particles containing iron as a main component | | | |
|---|---|---|---|---|
| | Average major axis diameter (µm) | Average minor axis diameter (µm) | Aspect ratio (-) | Geometrical standard deviation value (-) |
| Example 2 | 0.103 | 0.0125 | 8.2:1 | 1.38 |
| Example 3 | 0.072 | 0.0111 | 6.5:1 | 1.41 |
| Example 4 | 0.203 | 0.0240 | 8.5:1 | 1.44 |
| Comparative Example 1 | 0.103 | 0.0125 | 8.2:1 | 1.38 |
| Comparative Example 2 | 0.103 | 0.0125 | 8.2:1 | 1.38 |
| Comparative Example 3 | 0.103 | 0.0125 | 8.2:1 | 1.38 |
| Comparative Example 4 | 0.158 | 0.0179 | 8.8:1 | 1.54 |

Table 3 (continued)

| Examples and Comparative Examples | Properties of composite magnetic metal particles containing iron as a main component | | | |
|---|---|---|---|---|
| | BET specific surface area value ($m^2/g$) | Magnetic properties | | Soluble Na salt content (ppm) |
| | | Coercive force value (kA/m) | Saturation magnetization value ($Am^2/kg$) | |
| Example 2 | 47.3 | 140.8 | 132.5 | 6 |
| Example 3 | 51.6 | 173.7 | 137.5 | 3 |
| Example 4 | 40.4 | 125.2 | 128.6 | 9 |
| Comparative Example 1 | 47.6 | 137.7 | 129.3 | 28 |
| Comparative Example 2 | 48.1 | 135.7 | 127.2 | 23 |
| Comparative Example 3 | 46.1 | 141.4 | 132.6 | 131 |
| Comparative Example 4 | 38.7 | 126.8 | 123.1 | 5 |

Table 3 (continued)

| Examples and Comparative Examples | Properties of composite magnetic metal particles containing iron as a main component | |
|---|---|---|
| | Oxidation stability | |
| | Percentage of change in coercive force value (%) | Percentage of change in saturation magnetization value (%) |
| Example 2 | 7.6 | 6.3 |
| Example 3 | 7.3 | 5.4 |
| Example 4 | 4.2 | 3.1 |
| Comparative Example 1 | 17.6 | 19.3 |
| Comparative Example 2 | 19.1 | 21.0 |
| Comparative Example 3 | 11.2 | 12.6 |
| Comparative Example 4 | 21.6 | 31.3 |

Table 3 (continued)

| Examples and Comparative Examples | Properties of composite magnetic metal particles containing iron as a main component | | |
|---|---|---|---|
| | Deagglomerating ability | | |
| | Crush test (-) | Particle size distribution | |
| | | Average particle diameter (μm) | Content of particles having a particle diameter of not more than 10 μm (%) |
| Example 2 | 4 | 1.26 | 95.7 |
| Example 3 | 5 | 0.98 | 98.4 |
| Example 4 | 5 | 0.86 | 96.9 |
| Comparative Example 1 | 2 | 13.62 | 68.4 |
| Comparative Example 2 | 1 | 21.64 | 58.4 |
| Comparative Example 3 | 3 | 5.63 | 88.7 |
| Comparative Example 4 | 3 | 8.38 | 81.4 |

Table 4

| Examples and Comparative Examples | Production of magnetic recording medium | | Properties of coating composition |
|---|---|---|---|
| | Kind of magnetic particles | Weight ratio of particles to resin (-) | Viscosity (cP) |
| Example 5 | Example 2 | 5.0:1 | 9,968 |
| Example 6 | Example 3 | 5.0:1 | 7,654 |
| Example 7 | Example 4 | 5.0:1 | 5,623 |
| Comparative Example 5 | Magnetic particles (c) | 5.0:1 | 8,654 |
| Comparative Example 6 | Comparative Example 1 | 5.0:1 | 10,240 |
| Comparative Example 7 | Comparative Example 2 | 5.0:1 | 11,252 |
| Comparative Example 8 | Comparative Example 3 | 5.0:1 | 5,623 |
| Comparative Example 9 | Comparative Example 4 | 5.0:1 | 12,560 |

Table 4 (continued)

| Examples and Comparative Examples | Properties of magnetic recording medium | | |
|---|---|---|---|
| | Thickness of magnetic layer (μm) | Coercive force value (kA/m) | Squareness (Br/Bm) (-) |
| Example 5 | 3.5 | 144.9 | 0.89 |
| Example 6 | 3.5 | 178.3 | 0.90 |
| Example 7 | 3.4 | 129.8 | 0.91 |
| Comparative Example 5 | 3.5 | 131.1 | 0.85 |
| Comparative Example 6 | 3.6 | 143.0 | 0.83 |
| Comparative Example 7 | 3.6 | 140.2 | 0.81 |
| Comparative Example 8 | 3.5 | 142.6 | 0.87 |
| Comparative Example 9 | 3.5 | 134.3 | 0.86 |

Table 4 (continued)

| Examples and Comparative Examples | Properties of magnetic recording medium | | |
|---|---|---|---|
| | Gloss (%) | Surface roughness Ra (nm) | Young's modulus (relative value) |
| Example 5 | 216 | 6.8 | 132 |
| Example 6 | 223 | 6.4 | 133 |
| Example 7 | 235 | 5.9 | 134 |
| Comparative Example 5 | 186 | 11.2 | 123 |
| Comparative Example 6 | 180 | 12.3 | 123 |
| Comparative Example 7 | 163 | 18.1 | 121 |
| Comparative Example 8 | 201 | 10.2 | 126 |
| Comparative Example 9 | 189 | 11.2 | 121 |

Table 4 (continued)

| Examples and Comparative Examples | Properties of magnetic recording medium | |
|---|---|---|
| | Storage stability | |
| | Percentage of change in coercive force value (%) | Percentage of change in saturation magnetization value (%) |
| Example 5 | 3.6 | 4.3 |
| Example 6 | 3.1 | 1.6 |
| Example 7 | 2.3 | 2.1 |
| Comparative Example 5 | 12.3 | 11.6 |
| Comparative Example 6 | 8.3 | 7.8 |
| Comparative Example 7 | 9.6 | 8.8 |
| Comparative Example 8 | 7.1 | 7.3 |
| Comparative Example 9 | 10.3 | 15.6 |

Table 5

| Kind of non-magnetic particles | Properties of non-magnetic particles for non-magnetic undercoat layer | |
|---|---|---|
| | Kind | Particle shape |
| Non-magnetic particles 1 | Hematite particles | Spindle-shaped |
| Non-magnetic particles 2 | Goethite particles | Acicular |
| Non-magnetic particles 3 | Hematite particles | Acicular |
| Non-magnetic particles 4 | Hematite particles | Acicular |
| Non-magnetic particles 5 | Hematite particles | Acicular |
| Non-magnetic particles 6 | Goethite particles | Acicular |

Table 5 (continued)

| Kind of non-magnetic particles | Properties of non-magnetic particles for non-magnetic undercoat layer | | |
|---|---|---|---|
| | Average major axis diameter (μm) | Average minor axis diameter (μm) | Aspect ratio (-) |
| Non-magnetic particles 1 | 0.187 | 0.0240 | 7.8:1 |
| Non-magnetic particles 2 | 0.240 | 0.0272 | 8.8:1 |
| Non-magnetic particles 3 | 0.143 | 0.0210 | 6.8:1 |
| Non-magnetic particles 4 | 0.115 | 0.0179 | 6.42:1 |
| Non-magnetic particles 5 | 0.143 | 0.0211 | 6.8:1 |
| Non-magnetic particles 6 | 0.240 | 0.0273 | 8.8:1 |

Table 5 (continued)

| Kind of non-magnetic particles | Properties of non-magnetic particles for non-magnetic undercoat layer | |
|---|---|---|
| | Geometrical standard deviation value (-) | BET specific surface area value ($m^2/g$) |
| Non-magnetic particles 1 | 1.33 | 43.3 |
| Non-magnetic particles 2 | 1.37 | 86.3 |
| Non-magnetic particles 3 | 1.37 | 54.9 |
| Non-magnetic particles 4 | 1.35 | 58.3 |
| Non-magnetic particles 5 | 1.37 | 55.6 |
| Non-magnetic particles 6 | 1.35 | 88.1 |

Table 5 (continued)

| Kind of non-magnetic particles | Properties of non-magnetic particles for non-magnetic undercoat layer | | |
|---|---|---|---|
| | Coating amount of Al (wt. %) | Al content (wt. %) | Amount of carbon black adhered (calculated as C) (wt. %) |
| Non-magnetic particles 1 | - | - | - |
| Non-magnetic particles 2 | - | - | - |
| Non-magnetic particles 3 | 0.98 | - | - |
| Non-magnetic particles 4 | - | 0.67 | - |
| Non-magnetic particles 5 | - | - | 4.75 |
| Non-magnetic particles 6 | - | - | 4.81 |

Table 6

| Undercoat layer | Production of non-magnetic coating composition | | Properties of coating composition |
|---|---|---|---|
| | Kind of non-magnetic particles | Weight ratio of particles to resin (-) | Viscosity (cP) |
| Undercoat layer 1 | Non-magnetic particles 1 | 5.0:1 | 315 |
| Undercoat layer 2 | Non-magnetic particles 2 | 5.0:1 | 1,139 |
| Undercoat layer 3 | Non-magnetic particles 3 | 5.0:1 | 448 |
| Undercoat layer 4 | Non-magnetic particles 4 | 5.0:1 | 403 |
| Undercoat layer 5 | Non-magnetic particles 5 | 5.0:1 | 399 |
| Undercoat layer 6 | Non-magnetic particles 6 | 5.0:1 | 1,336 |

Table 6 (continued)

| Undercoat layer | Properties of non-magnetic undercoat layer | | | |
|---|---|---|---|---|
| | Thickness (μm) | Gloss (%) | Surface roughness Ra (nm) | Young's modulus (relative value) |
| Undercoat layer 1 | 3.4 | 191 | 8.2 | 124 |
| Undercoat layer 2 | 3.5 | 180 | 12.0 | 125 |
| Undercoat layer 3 | 3.4 | 205 | 6.3 | 126 |
| Undercoat layer 4 | 3.4 | 211 | 6.2 | 125 |
| Undercoat layer 5 | 3.4 | 199 | 7.1 | 125 |
| Undercoat layer 6 | 3.5 | 185 | 9.0 | 129 |

Table 7

| Examples and Comparative Examples | Production of magnetic recording medium | | Properties of coating composition |
|---|---|---|---|
| | Kind of non-magnetic undercoat layer | Kind of magnetic particles | Viscosity (cP) |
| Example 8 | Undercoat layer 1 | Example 2 | 9,872 |
| Example 9 | Undercoat layer 2 | Example 3 | 8,103 |
| Example 10 | Undercoat layer 3 | Example 4 | 7,862 |
| Example 11 | Undercoat layer 4 | Example 2 | 9,362 |
| Example 12 | Undercoat layer 5 | Example 3 | 7,832 |
| Example 13 | Undercoat layer 6 | Example 4 | 7,103 |
| Comparative Example 10 | Undercoat layer 1 | Magnetic particles (c) | 8,872 |
| Comparative Example 11 | Undercoat layer 1 | Comparative Example 1 | 9,653 |
| Comparative Example 12 | Undercoat layer 1 | Comparative Example 2 | 10,252 |
| Comparative Example 13 | Undercoat layer 1 | Comparative Example 3 | 5,863 |
| Comparative Example 14 | Undercoat layer 1 | Comparative Example 4 | 13,264 |

Table 7 (continued)

| Examples and Comparative Examples | Properties of magnetic recording medium | | |
|---|---|---|---|
| | Thickness of magnetic layer (µm) | Coercive force value (kA/m) | Squareness (Br/Bm) (-) |
| Example 8 | 1.0 | 145.3 | 0.90 |
| Example 9 | 1.0 | 179.4 | 0.90 |
| Example 10 | 1.0 | 131.0 | 0.89 |
| Example 11 | 1.1 | 144.7 | 0.90 |
| Example 12 | 1.0 | 180.1 | 0.91 |
| Example 13 | 1.0 | 130.8 | 0.91 |
| Comparative Example 10 | 1.1 | 131.5 | 0.85 |
| Comparative Example 11 | 1.0 | 142.4 | 0.84 |
| Comparative Example 12 | 1.0 | 140.2 | 0.83 |
| Comparative Example 13 | 1.0 | 142.8 | 0.87 |
| Comparative Example 14 | 1.0 | 135.1 | 0.86 |

Table 7 (continued)

| Examples and Comparative Examples | Properties of magnetic recording medium | | |
|---|---|---|---|
| | Gloss (%) | Surface roughness Ra (nm) | Young's modulus (relative value) |
| Example 8 | 221 | 6.2 | 133 |
| Example 9 | 228 | 6.0 | 134 |
| Example 10 | 230 | 5.8 | 136 |
| Example 11 | 235 | 5.6 | 130 |
| Example 12 | 238 | 5.6 | 132 |
| Example 13 | 231 | 5.9 | 138 |
| Comparative Example 10 | 188 | 10.3 | 125 |
| Comparative Example 11 | 184 | 10.1 | 124 |
| Comparative Example 12 | 170 | 16.6 | 122 |
| Comparative Example 13 | 203 | 10.1 | 128 |
| Comparative Example 14 | 191 | 10.8 | 126 |

Table 7 (continued)

| Examples and Comparative Examples | Properties of magnetic recording medium | |
|---|---|---|
| | Storage stability | |
| | Percentage of change in coercive force value (%) | Percentage of change in saturation magnetization value (%) |
| Example 8 | 3.3 | 3.5 |
| Example 9 | 2.6 | 2.7 |
| Example 10 | 2.1 | 2.0 |
| Example 11 | 3.2 | 3.3 |
| Example 12 | 2.2 | 2.5 |
| Example 13 | 1.8 | 1.9 |
| Comparative Example 10 | 11.9 | 11.4 |
| Comparative Example 11 | 8.0 | 7.7 |
| Comparative Example 12 | 9.1 | 8.7 |
| Comparative Example 13 | 7.1 | 7.2 |
| Comparative Example 14 | 10.2 | 14.6 |

## Claims

**1.** Composite magnetic metal particles containing iron as a main component, comprising:

(a) magnetic metal particles containing iron as a main component; and
(b) a polyether-modified polysiloxane coat provided on the surface of the magnetic metal particles in an amount of from 0.02 to 10% by weight, calculated as Si, based on the weight of the composite magnetic metal particles; said composite magnetic metal particles having an average major axis diameter of 0.02 to 0.30 μm and a soluble sodium salt content of not more than 10 ppm.

**2.** Composite magnetic metal particles containing iron as a main component according to claim 1, which further have an average minor axis diameter of from 0.001 to 0.15 µm and an aspect ratio of from 2:1 to 20:1.

**3.** Composite magnetic metal particles containing iron as a main component according to claim 1 or 2, which further have geometrical standard deviation value of a major axis diameter of not more than 2.5 and a BET specific surface area of from 35 to 100 $m^2/g$.

**4.** Composite magnetic metal particles containing iron as a main component according to any one of the preceding claims, which further have a soluble sodium salt content of not more than 8 ppm, a coercive force value of from 63.7 to 278.5 kA/m and a saturation magnetization value of from 90 to 170 $Am^2/kg$.

**5.** Composite magnetic metal particles containing iron as a main component according to any one of the preceding claims, which further have a percentage (%) of change in coercive force value of the particles of not more than 12% and a percentage (%) of change in saturation magnetization value of not more than 12%.

**6.** Composite magnetic metal particles containing iron as a main component according to claim 1, which have an average minor axis diameter of 0.001 to 0.15 µm, an aspect ratio of 2:1 to 20:1 and a geometrical standard deviation value of a major axis diameter of not more than 2.5.

**7.** A process for producing composite magnetic metal particles containing iron as a main component, comprising:

(i) dispersing magnetic metal particles containing iron as a main component in an aqueous solution thereby to form a suspension of, and to wash, the magnetic metal particles; and
(ii) adding a polyether-modified polysiloxane to the water suspension in an amount of from 0.02 to 10 parts by weight, calculated as Si, per 100 parts by weight of the magnetic metal particles, and then stirring and subjecting to dehydration the particles.

**8.** A process according to claim 7, wherein the particles are washed until the electric conductivity of the suspension of the particles is reduced to 10 µS/cm or less.

**9.** A process according to claim 7 or 8, wherein the concentration of the magnetic metal particles in the water suspension before adding the polyether-modified polysiloxane thereto is from 1 to 500 g/liter.

**10.** A magnetic recording medium, comprising a non-magnetic base film; and a magnetic recording layer which is provided on the non-magnetic base film and which comprises the particles defined in any of claims 1 to 6 and a binder resin.

**11.** A magnetic recording medium according to claim 10, which has a coercive force value of from 63.7 to 278.5 kA/m, a squareness (residual magnetic flux density Br/saturation magnetic flux density Bm) of from 0.85 to 0.95, a gloss of coating film of 195 to 300%, and a surface roughness Ra of coating film of not more than 8.5 nm.

**12.** A magnetic recording medium according to claim 10, further comprising a non-magnetic undercoat layer which is provided between the non-magnetic base film and the magnetic recording layer, and which comprises non-magnetic particles and a binder resin.

**13.** A magnetic recording medium according to claim 12, which has a coercive force value of from 63.7 to 278.5 kA/m, a squareness (residual magnetic flux density Br/saturation magnetic flux density Bm) of from 0.85 to 0.95, a gloss of coating film of from 200 to 300% and a surface roughness Ra of coating film of not more than 8.0 nm.

**14.** A magnetic recording medium according to any one of claims 10 to 13, which has a percentage (%) of change in coercive force value of the particles of not more than 7% and a percentage (%) of change in saturation magnetization value of not more than 7%.

European Patent Office

# EUROPEAN SEARCH REPORT

Application Number
EP 02 25 2911

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| Y | EP 0 982 715 A (TODA KOGYO) 1 March 2000 (2000-03-01) * page 5, line 34 - line 36 * * page 5, line 46 - line 47 * * page 5, line 57 - line 58 * * page 6, line 10 - line 12 * * page 6, line 17 - line 19 * * page 6, line 34 - line 36 * * page 8, line 2 - line 3 * * page 8, line 43 - page 9, line 2 * * page 10, line 10 - line 12 * * page 12, line 25 - line 27 * * page 12, line 37 - line 53 * * page 19, line 5 - line 37 * * page 32 * | 1-14 | G11B5/712 C09C3/12 H01F1/06 H01F1/26 |
| Y | EP 0 957 474 A (TODA KOGYO) 17 November 1999 (1999-11-17) * page 10, line 13 - line 33 * * page 11, line 51 - line 53 * * page 20, line 42 - page 21, line 14 * * page 33 - page 35 * * page 37 * * page 46 * | 1-14 | |
| | -/-- | | TECHNICAL FIELDS SEARCHED (Int.Cl.7) G11B C09C H01F |

The present search report has been drawn up for all claims

| Place of search | Date of completion of the search | Examiner |
|---|---|---|
| THE HAGUE | 15 July 2002 | Magrizos, S |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

European Patent Office

# EUROPEAN SEARCH REPORT

Application Number
EP 02 25 2911

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| Y | US 5 670 245 A (ISOBE ET AL.)<br>23 September 1997 (1997-09-23)<br>* column 2, line 14 - line 17 *<br>* column 2, line 45 - line 51 *<br>* column 12, line 17 - line 22 *<br>* column 12, line 31 - column 13, line 21 *<br>* column 13, line 65 - column 14, line 2 *<br>* column 15, line 22 - line 23 *<br>* column 15, line 50 - line 52 *<br>* column 16, line 5 - line 7 *<br>* column 19, line 18 - line 42 *<br>* column 21; table 3A *<br>* column 25; table 7A * | 1-6, 10-14 | |
| Y | EP 0 555 056 A (TODA KOGYO)<br>11 August 1993 (1993-08-11)<br>* page 5, line 5 - line 7 *<br>* page 5, line 27 - line 30 *<br>* page 13; table 1 * | 5,14 | |
| | | | TECHNICAL FIELDS SEARCHED (Int.Cl.7) |
| Y | WO 98 32801 A (GENERAL ELECTRIC)<br>30 July 1998 (1998-07-30)<br>* page 32, line 16 - line 33 *<br>* page 33, line 20 - line 27 *<br>* page 33; table 30 *<br>* claims 1,6 * | 8 | |

The present search report has been drawn up for all claims

| Place of search | Date of completion of the search | Examiner |
|---|---|---|
| THE HAGUE | 15 July 2002 | Magrizos, S |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 02 25 2911

This annex lists the patent family membersrelating to the patent documents cited in the above-mentioned European search report.
The members are as contained in the European Patent Office EDP file on
The European Patent Office is in no way liable for these particulars which are merely given for the purpose of information.

15-07-2002

| Patent document cited in search report | Publication date | Patent family member(s) | Publication date |
|---|---|---|---|
| EP 982715 A | 01-03-2000 | JP 2000138115 A | 16-05-2000 |
| | | EP 0982715 A1 | 01-03-2000 |
| | | JP 2001015318 A | 19-01-2001 |
| | | JP 2001015317 A | 19-01-2001 |
| EP 957474 A | 17-11-1999 | EP 0957474 A1 | 17-11-1999 |
| | | JP 2000036404 A | 02-02-2000 |
| | | US 6294242 B1 | 25-09-2001 |
| US 5670245 A | 23-09-1997 | JP 7182649 A | 21-07-1995 |
| | | JP 7078331 A | 20-03-1995 |
| EP 555056 A | 11-08-1993 | JP 6100317 A | 12-04-1994 |
| | | DE 69310223 D1 | 05-06-1997 |
| | | EP 0555056 A2 | 11-08-1993 |
| | | US 5449565 A | 12-09-1995 |
| WO 9832801 A | 30-07-1998 | US 6120596 A | 19-09-2000 |
| | | AU 5672198 A | 18-08-1998 |
| | | EP 0960168 A1 | 01-12-1999 |
| | | WO 9832801 A1 | 30-07-1998 |

EPO FORM P0459

For more details about this annex : see Official Journal of the European Patent Office, No. 12/82